# EUROPÄISCHE PATENTSCHRIFT

(11) **EP 1 589 317 B1**
(45) Veröffentlichungstag und Bekanntmachung des Hinweises auf die Patenterteilung: **14.11.2007**
(21) Anmeldenummer: 04009675.2
(22) Anmeldetag: 23.04.2004
(51) Int. Cl.: G01B 5/012, G01B 7/012, G01B 21/04

(54) **Vorrichtung mit abnehmbarem Messtaster und Messgerät mit einer solchen Vorrichtung**
Apparatus with removable measuring probe and measuring device with such a measuring probe
Dispositif avec sonde de mesure amovible et appareil de mesure avec une telle sonde de mesure

(43) Veröffentlichungstag der Anmeldung: 26.10.2005
(73) Patentinhaber: Klingelnberg GmbH, 42499 Hückeswagen (DE)
(72) Erfinder: Mies, Georg, 51688 Wipperfürth (DE)
(74) Vertreter: OK pat AG

(56) Entgegenhaltungen:
- EP-A- 0 523 906
- WO-A-03/083407
- WO-A-03/087708
- US-A- 5 028 901
- US-A- 5 404 649
- US-A- 6 012 230

## Beschreibung

Die Erfindung betrifft Vorrichtungen mit abnehmbaren Messtastern und Messgeräte mit solchen Vorrichtungen.

### HINTERGRUND DER ERFINDUNG

Es gibt verschiedene Messgeräte, die mit einem auswechselbaren Messtaster ausgestattet sind. Die auswechselbaren Messtaster sollen möglichst schnell und unkompliziert abnehmbar sein.

Eine Ausführungsform eines konventionellen Messgeräts weist einen Messtaster auf, der mittels Federkraft mit einem Tastsystem verbunden werden kann. Diese Verbindung wird durch das Einhaken eines Hakensystems hergestellt. Es ist eine aktive Mechanik mit einem Servomotor vorgesehen, um das Ansetzen und Abnehmen des Messtasters zu bewerkstelligen.

Es gibt auch Beispiele für Messtaster, die mittels Permanentmagneten an einem Tastsystem eines Messgeräts befestigt sind. Im Falle einer Kollision des Messtasters zum Beispiel mit einem zu vermessenden Werkstück, fällt der Messtaster herunter, um so eine Beschädigung des Tastsystems zu vermeiden. Er muss von Hand wieder angesetzt werden. Ein entsprechendes Beispiel ist in dem Deutschen Gebrauchsmuster DE-GM 7400071 beschrieben.

Ein weiteres Messgerät ist in der US-Patentschrift US 5,755,038 dargestellt. Das Messgerät zeichnet sich dadurch aus, dass es einen Messtaster vorsieht, der über Permanentmagnete mit einem Tastsystem verbunden ist. Zwischen den Magneten befindet sich ein kleiner Luftspalt. Der Messtaster kann durch Aufbringen einer Kraft von dem Tastsystem getrennt werden. Es kommt keine Feder zum Einsatz. Um einen sicheren Halt des Messtasters gewährleisten zu können, müssen die Magnete eine gewisse Mindestanziehungskraft gewährleisten. Das hat jedoch den Nachteil, dass beim Aufsetzen des Messtasters dieser schlagartig angezogen wird. Ausserdem muss zum Trennen eine relativ grosse Kraft aufgebracht werden. Damit ist ein Abnehmen des Messtasters relativ schwierig.

Ein ähnlicher Ansatz ist in der PCT-Anmeldung WO 03/087708 beschrieben. Dort kommt zusätzlich zu dem Permanentmagneten, der den Messtaster und das Tastsystem zusammenhält, ein Dämpfer zum Einsatz, der entweder auf der Seite des Messtasters oder auf der Seite des Tastsystems sitzt. Der Dämpfer ist so ausgelegt, dass beim Annähern des Messtasters an das Tastsystem ein hartes Aufeinandertreffen durch die zuerst einsetzende Dämpferwirkung verhindert wird.

Ein weiteres Beispiel eines Messgeräts mit auswechselbarem Messtaster ist der Deutschen Patentschrift DE 3320127 C2 zu entnehmen. Dort ist ein Messgerät beschrieben, dessen Messtaster mittels einer Kombination eines Permanentmagneten und eines Elektromagneten befestigt ist. Das Feld des Elektromagneten ist dem Feld des Permanentmagneten überlagert. Ein Wechselteller mit Messtaster wird über eine Feder gegen ein Tastsystem gezogen. Durch den Elektromagneten kann die Magnetkraft des Permanentmagnets kurzfristig verstärkt, oder durch Umpolung reduziert werden. Beim Aufsetzen des Wechseltellers auf das Tastsystem ist ein Luftspalt zwischen dem Permanentmagnet und Wechselteller vorhanden, wodurch die magnetische Anziehungskraft gerade so gross ist, dass der Teller leicht vom Tastsystem angezogen wird. Es ist eine Feder vorhanden, die den Permanentmagneten zurückhält. Durch einen Stromimpuls wird die Magnetkraft des Permanentmagneten so vergrössert, dass die Federkraft überwunden wird und sich der Permanentmagnet dem Teller nähert und schliesslich an diesem anliegt. Der Teller wird jetzt über die Feder an das Tastsystem gezogen und es gibt keinen Luftspalt mehr zwischen dem Permanentmagneten und dem Teller. Zum Abnehmen des Tellers wird ein Stromimpuls in umgekehrter Richtung angelegt, der die Magnetkraft reduziert. Die Feder ist nun in der Lage den Permanentmagneten vom Teller wegzuziehen. Dadurch entsteht ein Luftspalt und der Teller lässt sich - ohne grosse Kräfte ausüben zu müssen - entfernen.

Es ist ein Nachteil dieses Systems, dass es wegen des Elektromagneten relativ hohe bewegte Massen hat. Ausserdem sind Kabelverbindungen zum beweglichen Teil des Tastsystems notwendig, um die Spule des Elektronmagneten mit Strom zu versorgen. Ein weiterer Nachteil ist, dass ein Wechseln nur im eingeschalteten Zustand möglich ist. Wenn es zu einer Kollision des Messtasters kommt, treten am Tastsystem relativ hohe Kräfte auf, da der Teller samt Messtaster durch die Federkraft am Tastsystem festgehalten wird.

Ein Ansatz mit magnetisch gekoppelten Arbeitsmodulen ist in der PCT-Anmeldung mit der Publikationsnummer WO 03/083407 A beschrieben. Gemäss diesem Dokument ist ein Aufbewahrungssystem mit einem externen Hebelmechanismus vorgesehen, welcher zur Überwindung der Haltekraft eingesetzt wird. Der Aufbau ist so, dass die starken magnetischen Anziehungskräfte nur durch das Einsetzen des Hebelmechanismus überwunden werden können. Beim Aufsetzen des Arbeitsmoduls wirkt die volle Magnetkraft.

Ein Ansatz mit magnetisch gekoppelten Wechselteller ist in dem Patent US 6,012,230 beschrieben. Ein System zur Überwindung der magnetischen Haltekraft ist im Wechselteller angeordnet. Zum Abnehmen des Wechseltellers wird ein axial verschiebbarer Ring bewegt, der auf mehrere Hebel einwirkt, die das Trennen bewirken. Bei einem Wechselvorgang muss dieser Ring gezielt und in einer bestimmten Art und Weise gefasst und gezogen werden, um den Mechanismus zum Überwinden der Haltekraft zur Wirkung zu bringen. Beim manuellen Aufsetzen wirkt auch die volle Magnetkraft. US 6,012,230 wird als nächstliegender Stand der Technik betrachtet.

Es ist eine Aufgabe der Erfindung eine Vorrichtung mit einem abnehmbaren Messtaster bereit zu stellen, die es ermöglicht ein automatisches Abnehmen des Messtasters vorzunehmen. Eine weitere Aufgabe der Erfindung ist es, ein möglichst einfaches manuelles Wechseln des Messtasters zu gestatten.

Es ist eine weitere Aufgabe ein Messgerät mit einer Vorrichtung mit abnehmbarem Messtaster so auszulegen, dass nicht nach jedem Wechsel eine neue Kalibrierung notwendig wird. Ausserdem soll eine Beschädigung des Tastsystems verhindert werden.

Mit der vorliegenden Erfindung soll insbesondere die Aufgabe gelöst werden, ein numerisch gesteuertes Messgerät (CNC Messgerät) so zu verbessern, dass es einen einfachen und betriebssicheren Aufbau hat.

Die Aufgabe wird durch eine Vorrichtung gemäss Anspruch 1 und ein Messgeräts gemäss Anspruch 11 gelöst.

Vorteilhafte Ausgestaltungen des erfindungsgemässen Vorrichtung bilden die Gegenstände der Ansprüche 2 bis 10. Vorteilhafte Ausgestaltungen des erfindungsgemässen Verzahnungsmessgeräts bilden den Gegenstand des Anspruchs 12.

### ZEICHNUNGEN

Ausführungsbeispiele der Erfindung werden im Folgenden unter Bezugnahme auf die Zeichnungen näher beschrieben. Es zeigen:
- **FIG. 1**: ein erstes Messgerät, gemäss Erfindung;
- **FIG. 2**: den prinzipiellen Aufbau eines Drei-Koordinaten- Tastkopfes mit horizontaler Hauptachse eines zweiten Messgeräts, gemäss Erfindung, wobei der mechanische Aufbau des Tastkopfes der besseren Übersichtlichkeit wegen etwas auseinander gezogen dargestellt ist;
- **FIG. 3A**: den prinzipiellen Aufbau eines Tastkopfes mit Hebelanordnung, gemäss Erfindung, wobei sich der Tastkopf in einer Nullposition befindet;
- **FIG. 3B**: den Tastkopf mit Hebelanordnung gemäss Fig. 3A, wobei sich der Tastkopf in einer hinteren Endstellung befindet;
- **FIG. 3C**: den Tastkopf mit Hebelanordnung gemäss Fig. 3A, wobei sich der Tastkopf in einer Ausgangsstellung für das Aushebeln befindet;
- **FIG. 3D**: den Tastkopf mit Hebelanordnung gemäss Fig. 3A, wobei sich der Tastkopf in einer vorderen Endstellung befindet;
- **FIG. 3E**: den Tastkopf mit Hebelanordnung gemäss Fig. 3A, wobei der Messtaster abgenommen wurde und das Tastsystem arretiert ist;
- **FIG. 3F**: den Tastkopf mit Hebelanordnung gemäss Fig. 3A, wobei der Messtaster wieder aufgesetzt wurde;
- **FIG. 3G**: den Tastkopf mit Hebelanordnung gemäss Fig. 3A, wobei der Messtaster samt Tastsystem in die Nullposition verschoben wurde;
- **FIG. 3H**: den Tastkopf mit Hebelanordnung gemäss Fig. 3A, wobei der Messtaster samt Tastsystem in die Nähe der hinteren Endstellung verschoben wurde;
- **FIG. 3I**: den Tastkopf mit Hebelanordnung gemäss Fig. 3A, wobei der Messtaster wieder am Tastsystem angekoppelt wurde;
- **FIG. 3J**: den Tastkopf mit Hebelanordnung gemäss Fig. 3A, wobei sich der Tastkopf wieder in der Ausgangsposition befindet.

### DETAILIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen sollen. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäss anzuwenden.

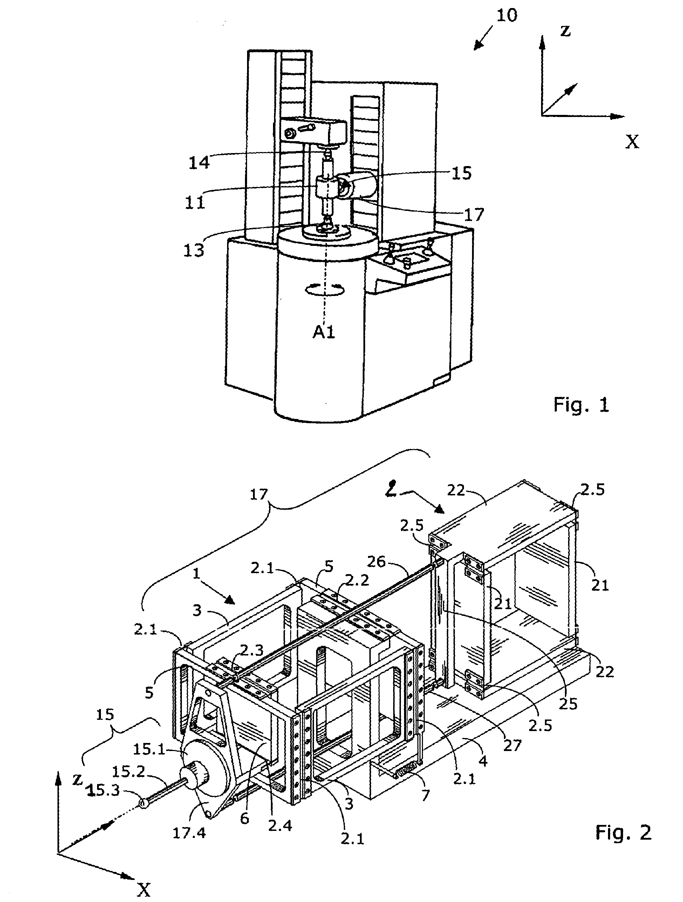

In einer vorteilhaften Ausführungsform der Erfindung, die in Fig. 1 gezeigt ist, geht es um ein vollautomatisches, CNC-gesteuertes Verzahnungsmessgerät 10. Das Verzahnungsmessgerät 10 ist geeignet zum Prüfen von Stirnradverzahnungen sowie Schneid- und Schabrädern, Schnecken und Schneckenrädern, Wälzfräsern, Kegelrädern und allgemeinen Maß-, Form- und Lageabweichungen an rotationssymmetrischen Werkstücken, zur Kurven- und Nockenwellenmessung oder auch zur Rotormessung, um nur einige Einsatzmöglichkeiten aufzuzählen.

Das Verzahnungsmessgerät 10 umfasst einen über eine Ansteuerung 12 antreibbaren Mitnehmer 13 und ein Zentriermittel 14, wobei der Mitnehmer 13 und das Zentriermittel 14 so angeordnet sind, dass ein zu vermessendes rotationssymmetrisches Präzisionsteil 11 koaxial zwischen Mitnehmer 13 und Zentriermittel 14 einspannbar ist, wie in Fig. 1 anhand eines Zylinderrades 11 gezeigt.

Das Verzahnungsmessgerät 10 umfasst, wie in Fig. 1 gezeigt, mindestens einen Messtaster 15 zum dreidimensionalen Vermessen (Drei-Koordinaten-Tastsystem) des in dem Verzahnungsmessgerät 10 eingespannten Präzisionsteiles 11. Vorzugsweise ist ein Tastsystem 17 vorgesehen, das in der Höhe verschoben werden kann, wie durch die Koordinatenachse Z angedeutet. Ausserdem kann der Messtaster 15 weitere Zustellbewegungen ausführen, wie durch die senkrecht zueinander stehenden Koordinatenachsen X und Y angedeutet.

In Fig. 2 ist die Schnittansicht des Tastsystems 17 eines Verzahnungsmessgeräts 10 gezeigt, das ähnlich aufgebaut ist wie das in Fig. 1 gezeigte Tastsystem 17. Es werden daher die gleichen Referenznummern verwendet. Im Folgenden werden nur die zum Verständnis der Erfindung wesentlichen Elemente erläutert. Weitere Details zu einem solchen Verzahnungsmessgerät 10 sind zum Beispiel der Patentschrift DE 19721015 (Drei-Koordinaten-Tastkopf) oder der Offenlegungsschrift DE19501178 (Zwei-Koordinaten-Tastkopf) zu entnehmen.

Gezeigt ist ein Tastsystem 17 in horizontaler Bauweise das, wie gesagt, Teil eines numerisch gesteuerten Verzahnungsmessgeräts 10 ist und das mit einem in mehreren Freiheitsgraden parallel zu sich selbst auslenkbaren Taststift 15.2, der über mehrere funktionell senkrecht zueinander angeordnete Federparallelogramm-Systeme an einer festen Tastkopfbasis 4 angelenkt ist, ausgestattet ist. Die Auslenkungen des Taststifts 15.2 werden durch drei an der Tastkopfbasis befestigte Messwertgeber erfasst, die jedoch nicht gezeigt sind.

Der in Fig. 2 dargestellte Tastkopf besitzt einen Messtaster 15 und ein Tastsystem 17. Das Tastsystem 17 weist eine winkelförmige Tastkopfbasis 4 auf, die an dem nicht näher dargestellten Verzahnungsmessgerät 10 befestigt ist. An einem Teil der Tastkopfbasis 4 ist ein erstes Federparallelogramm 1 beweglich aufgehängt. Es umfasst je zwei gleich lange, paarweise angeordneten Elemente 3 und 5, die durch vier Federgelenke 2.1 mit vertikalen Achsen untereinander verbunden sind und Parallelverschiebungen des Elements 5 in X-Richtung ermöglichen. Die Aufhängung des ersten Federparallelogramms 1 ist so ausgeführt, dass das gesamte Federparallelogramm 1 um die horizontale Achse eines weiteren Federgelenks 2.2 schwenkbar ist. Eine einstellbare Zugfeder 7 sorgt für den erforderlichen Gewichtsausgleich, so dass das erste Federparallelogramm 1 bei unausgelenktem Tastkopf eine horizontale Lage einnimmt. Die Zugfeder 7 ist in Fig. 2 nur schematisch gezeigt.

Es ist ein Verbindungselement 6 zwischen dem ersten Federparallelogramm 1 und dem Taststiftträger 17.4 vorgesehen. Es ist an einer Seite mit zum Federgelenk 2.2 parallelen Federgelenken 2.3 an einer oberen Kante des Elements 5 und an der anderen Seite mit einem weiteren zum Federgelenk 2.2 parallelen Federgelenk 2.4 an einem Taststiftträger 17.4 beweglich verbunden. Von diesem Verbindungselement 6 wird der Taststiftträger 17.4 aber noch nicht ausreichend gehalten. Dafür können zusätzlich noch zwei im vertikalen Abstand angeordnete Doppelgelenkstäbe 26 und 27 am Taststiftträger 17.4 angebracht sein, die sich an einem vertikalen Steg 25 abstützen. Der Steg 25 gehört zu einem zweiten Federparallelogramm 8, das von je zwei gleich langen, paarweise angeordneten Elementen 21 und 22 gebildet wird, die durch vier Federgelenke 2.5 mit horizontalen Achsen untereinander verbunden sind. Dieses zweite Federparallelogramm 8 ist mit einem Element 22 so auf der Tastkopfbasis 4 befestigt, dass Parallelverschiebungen des anderen Elements 22 in Y-Richtung möglich sind. An diesem Element 22 ist der vertikale Steg 25 befestigt. Mit dieser Anordnung wird gewährleistet, dass der Taststiftträger 17.4 gleichzeitig in X-, Y- und Z-Richtung auslenkbar ist und sich nur parallel zur Längsachse A2 verschiebt, wodurch die Länge des auswechselbaren Taststifts 15.2 samt Tastkugel 15.3 keinen Einfluss auf das Messergebnis hat.

In Fig. 2 kann man weiter erkennen, dass der Taststift 15.2 auf einer Art (Wechsel-) Teller 15.1 sitzt. Der Teller 15.1 ist an dem Taststiftträger 17.4 des Tastsystems 17 befestigbar. Die Befestigung erfolgt über eine erfindungsgemässe Hebelanordnung, die in Fig. 2 nicht zu erkennen ist.

Das Verzahnungsmessgerät 10 führt die Tastkugel 15.3 vertikal und radial an das zu prüfende Werkstück 11 heran, wobei die Längsachse A2 des Taststiftes 15.2 eine horizontale Lage hat, und dreht dabei das Werkstück 11, bis die Tastkugel 15.3 es an einer vorgebbaren Stelle berührt. Zum Messen einer beliebigen Zahntopographie kann die gekrümmte Zahnfläche des Werkstücks 11 in jedem Punkt in Normalenrichtung angetastet werden. Dazu ist der Messtaster 15 in allen drei Koordinatenrichtungen X, Y, Z des Raumes auslenkbar, wie oben beschrieben.

Eine solche berührungslose, inkrementale Messanordnung erfasst alle Auslenkungen der Tastkugel 15.3 in dem von den drei Koordinatenrichtungen X, Y und Z aufgespannten Raum. Kommt ein Zwei-Koordinaten Tastsystem zum Einsatz, so sind Auslenkungen in nur zwei Koordinatenrichtungen erfassbar.

Die erfindungsgemässe Hebelanordnung ist so aufgebaut und angeordnet, dass sie den Messtaster 15 in Koordinatenrichtung Y in einer definierten Mittenlage hält. Aus dieser definierten Mittenlage heraus ist die Tastkugel 15.3 sowohl in positiver als auch in negativer Y-Koordinatenrichtung auslenkbar, je nach dem, von welcher Seite sie mit dem Werkstück 11 in Kontakt kommt. Eine entsprechende mechanische Einrichtung ist, wie beispielhaft anhand der Fig. 2 beschrieben, über Parallelogrammsysteme 1 und 2 mechanisch mit der Tastkopfbasis 4 verbunden. Die genaue Funktionsweise dieser Vorrichtung kann der bereits erwähnten Patentschrift DE 19721015 entnommen werden.

Der Messtaster 15 ist extrem empfindlich und es ist beim schnellen Vermessen wichtig, dass der Messtaster 15 beim Bewegen in dem durch die Koordinatenachsen X, Y und Z aufgespannten Raum oder beim Bewegen des Werkstücks 11 um die Achse A1 nicht mit dem Werkstück 11 kollidiert. Ausserdem muss je nach Messprotokoll ein anderer Messtaster 15 eingesetzt werden können.

Es werden daher, wie im einleitenden Teil bereits erwähnt, vorzugsweise auswechselbare Messtaster 15 eingesetzt.

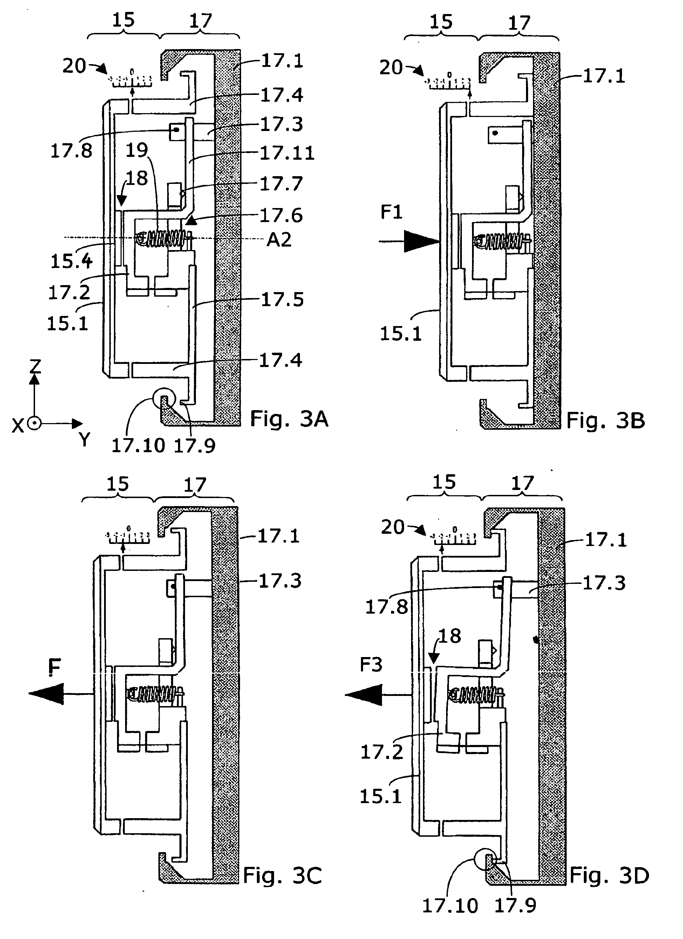

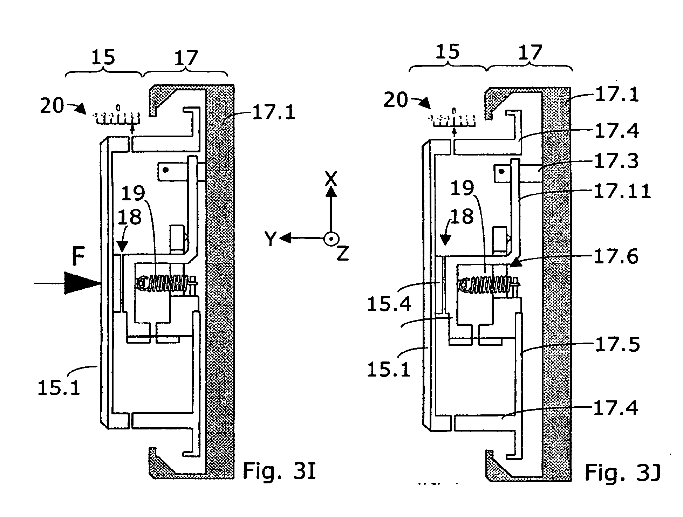

Eine erste Ausführungsform der erfindungsgemässen Hebelanordnung ist den Figuren 3A - 3J zu entnehmen. Diese Figuren zeigen einen Schnitt durch den vorderen Teil des Tastsystems 17 und des Tellers 15.1 in verschiedenen Positionen. Weitere Details des Messtasters 15 selbst sind in diesen Figuren nicht gezeigt. Das Tastsystem 17 weist in der in den Figuren 3A - 3J gezeigten Ausführungsform an seinem vorderen Ende zum Beispiel einen zylinderförmigen Anschlussbereich 17.1 auf, der grau dargestellt ist. Dieser Anschlussbereich 17.1 kann zum Beispiel mechanisch mit der Tastkopfbasis 4 verbunden sein. Der Messtaster 15 umfasst ein tellerförmiges Element 15.1 (Wechselteller) das abnehmbar ist, wie aus der in den Figuren 3A - 3J dargestellten Sequenz zu entnehmen ist. Der Messtaster 15 ist in der sogenannten Nullposition (Fig. 3A) durch die Anziehungskraft eines Permanentmagnets 15.4 mit dem Tastsystem 17 verbunden. Es ist, wie in den Figuren gezeigt, gemäss Erfindung eine mechanische Hebelanordnung vorgesehen, die beim Herausziehen des Messtasters 15 durch eine Verlagerungsbewegung den Messtaster 15 samt Tastsystem 17 in eine Wechselposition überführt, dabei den Permanentmagnet 15.4 räumlich vom Messtaster 15 trennt und dadurch die Anziehungskraft reduziert, die auf den Messtaster 15 wirkt. Der Übergang von der Nullposition zur Wechselposition (auch vordere Endstellung genannt) ist in den Figuren 3A bis 3D gezeigt.

Vorzugsweise ist die Anordnung des Permanentmagnets 15.4 so gewählt, dass zwischen dem Magnet 15.4 und einem Hebelelement 17.2 des Tastsystems 17 ein Luftspalt 18 liegt, wie in Fig. 3A zu erkennen ist. Bei der gezeigten Ausführungsform ist der mechanische Aufbau wie folgt realisiert. Der Anschlussbereich 17.1 ist mit mindestens einem Zapfen 17.3 versehen, der sich im Wesentlichen parallel zur Y-Koordinatenachse erstreckt. Das Hebelelement 17.2 weist eine Führung, zum Beispiel in Form eines Loches, auf, um entlang der durch den Zapfen 17.3 vorgegebenen Richtung verschoben werden zu können. Es ist ein zylinderförmiges Trägerelement 17.4 vorgesehen, welches die erfindungsgemässe Hebelanordnung und andere Elemente des Abtastkopfes ringförmig umschliesst. Das zylinderförmige Trägerelement 17.4 weist einen nach innen ragenden Fortsatz 17.5 auf, der sich im Wesentlichen parallel zur Z-Koordinatenachse erstreckt. Der Fortsatz 17.5 weist eine Ausnehmung 17.6 zum Durch- oder Vorbeiführen eines Schenkels des Hebelelements 17.2 auf. Ausserdem ist der Fortsatz 17.5 im gezeigten Ausführungsbeispiel mit einem Anschlag 17.7 für das Hebelelement 17.2 versehen. Ein federndes Element 19 (im vorliegenden Beispiel eine Zugfeder) ist zum Beispiel zwischen dem Fortsatz 17.5 und dem Hebelelement 17.2 angeordnet. Im gezeigten Beispiel erstreckt sich das federnde Element 19 im Wesentlichen parallel zur Achse A2, was nicht notwendigerweise so sein muss. In der Nullposition, die in Fig. 3A durch die Nullstellung der Skala 20 angedeutet ist, ist der Teller 15.1 durch die vom Magneten 15.4 ausgehenden Kräfte fest über die Hebelanordnung mit dem Hebelelement 17.2, dem Fortsatz 17.5 und dem zylinderförmigen Trägerelement 17.4 mit dem Tastsystem 17 verbunden. Die Hebelanordnung mit dem Hebelelement 17.2, dem Fortsatz 17.5 und dem zylinderförmigen Trägerelement 17.4 bildet in der Nullposition (Messstellung) eine mechanisch stabile Einheit, die solidarisch mit dem Teller 15.1 entlang der durch den Zapfen 17.3 vorgegebenen Richtung beweglich ist. Der Teller 15.1 ist so aufgehängt, wie zum Beispiel im Zusammenhang mit Fig. 2 beschrieben, dass Auslenkungen durch das Verzahnungsmessgerät 10 erfassbar sind.

Durch die beispielhaft gezeigte Ausführungsform ist die Bewegungsrichtung in Richtung der positiven Y-Koordinatenachse grösser als in - Y Richtung. Damit kann, wie in Fig. 3B gezeigt, ein optionaler Kollisionsschutz realisiert werden, der sich wie folgt verhält. Tritt eine zu grosse Grenzkraft F1 auf, die in +Y Richtung über die Tastkugel 15.3 und den Stift 15.2 auf den Teller 15.1 wirkt, so wird die gesamte Hebelanordnung mit dem Messtaster 15 gegen den Anschlussbereich 17.1 geschoben, bis sie dort aufsitzt. Diese Stellung, die in Fig. 3B gezeigt ist, wird als hintere Endstellung bezeichnet. Sie ist gleichzeitig die hintere Begrenzung des Messbereichs des Tastsystems 17, wie anhand der Skala 20 gezeigt ist.

Das Tastsystem 17 hat auch eine vordere Begrenzung des Messbereichs, die in Fig. 3C gezeigt ist. Diese Begrenzungsstellung wird eingenommen, wenn eine Kraft F2 in -Y Richtung auf den Messtaster 15 einwirkt und die gesamte Hebelanordnung in Richtung der -Y Achse verlagert. Am Zapfen 17.3 ist ein Anschlag 17.8 vorgesehen, welcher der solidarischen Bewegung der gesamten Hebelanordnung ein Ende setzt. Die vordere Begrenzung des Messbereichs ist in Fig. 3C erreicht. Eine weitere solidarische Parallelverschiebung entlang des Zapfens 17.3 ist nicht mehr möglich. Dadurch ist der Messbereich in die negative Auslenkungsrichtung begrenzt. Die Skala 20 hat in dem gezeigten Beispiel die Position -1 erreicht. Diese vordere Begrenzung des Messbereichs ist gleichzeitig bei der gezeigten Ausführungsform die Ausgangslage für das erfindungsgemässe mechanische Aushebeln über die Hebelanordnung. Zwischen der hinteren Endstellung und der vorderen Begrenzung wird die erfindungsgemässe Hebelanordnung im Wesentlichen solidarisch mit dem Messtaster 15 verschoben, ohne dass Elemente der Hebelanordnung sich relativ zueinander neigen, drehen oder verschieben.

Das Aushebeln wird anhand der Figuren 3C bis 3E beschrieben. Wirkt eine Kraft F3, mit F3>F2, auf den Messtaster 15, wie in Fig. 3D gezeigt, so versucht das Hebelelement 17.2, das durch die Magnetkraft angezogen wird, dieser Bewegung zu folgen. Das Hebelelement 17.2, das am Anschlag 17.8 des Zapfens 17.3 anliegt, bleibt zurück und der Luftspalt 18 wird vergrössert, bis die in Fig. 3D gezeigte vordere Endstellung erreicht ist (die Skala 20 steht jetzt zum Beispiel auf -2). Es wirkt aufgrund des vergrösserten Luftspalts nur noch eine reduzierte Kraft zwischen dem Tastsystem 17 und dem Teller 15.1. Der Teller 15.1 samt Stift 15.2 und Kugel 15.3 kann jetzt relativ einfach abgenommen werden. Hierzu braucht es nur noch eine Kraft F, die kleiner ist als zum Beispiel die Kraft F in Bild 3C. Da ein umlaufender Kragen 17.9 des Trägerelements 17.4 an einem Anschlagbereich 17.10 des Anschlussbereichs 17.1 anliegt, können aber das Trägerelement 17.4 samt federndem Element 19 und Hebelelement 17.2 keine weitere solidarische Verschiebung in die -Y Richtung vollziehen.

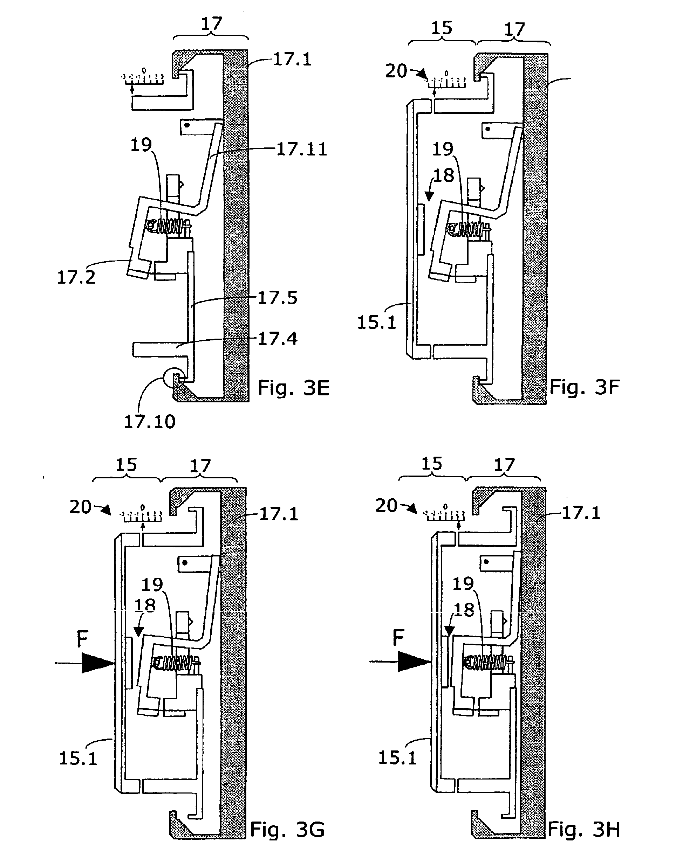

Eine entsprechende Abbildung ist in Fig. 3E gezeigt. Dort ist das Tastsystem 17 ohne den Teller 15.1 zu sehen. Über die erfindungsgemässe Hebelanordnung wird das Tastsystem 17 in der vorderen Endstellung gehalten. Dies geschieht im gezeigten Beispiel dadurch, dass das Hebelelement 17.2 durch das federnde Element 19 relativ zum Fortsatz 17.5 gekippt wird. Ein Ausleger 17.11 des Hebelelements 17.2 stützt sich gegen den Anschlussbereich 17.1 ab und drückt die Hebelanordnung in -Y Richtung gegen den Anschlagbereich 17.10 des Anschlussbereichs 17.1. Dadurch ist das Trägerelement 17.4 in dem Anschlussbereich 17.1 ausserdem in X und Z Richtung arretiert. Dies ist vorteilhaft, da ansonsten das Tastsystem 17 aufgrund des fehlenden Gewichts des Tellers 15.1 in Z Richtung auslenken würde.

In Fig. 3F wird der Teller 15.1 wieder aufgesetzt. Der Luftspalt 18 ist weiterhin relativ gross und es wirkt nur eine geringe magnetische Anziehungskraft. Der Teller 15.1 schnellt also nur ganz sanft gegen die Hebelanordnung des Tastsystems 17. Das Tastsystem 17 samt Hebelanordnung befindet sich weiterhin in der vorderen Endstellung. Erst wenn nun mit einer Kraft F in +Y Richtung gegen den Teller 15.1 gedrückt wird, wird der Teller 15.1 samt Hebelanordnung in die Nullposition (siehe Skala 20) verschoben und der Luftspalt 18 verkleinert sich dabei (siehe Fig. 3G). Noch reicht die Rückstellkraft der Feder 19 aus, um die Hebelanordnung in einer zurückversetzten Position zu halten.

Wird der Teller 15.1 samt Hebelanordnung des Tastsystems 17 weiter in die Nähe der hinteren Endstellung verschoben, wie in Fig. 3H gezeigt, so wird die Magnetkraft grösser als die Kraft der Feder 19 und das Hebelelement 17.2 wird zum Teller 15.1 hin gezogen. Im gezeigten Beispiel tritt dieser Übergang bei einer Position zwischen 2 und 3 auf der Skala 20 ein. In Fig. 3I ist nun eine Position gezeigt in der der Teller 15.1 an das Tastsystem 17 angekoppelt ist. Entfällt die Kraft F, so kehrt die gesamte Anordnung zurück in eine Nullposition (Messlage), die in Fig. 3J gezeigt ist.

Das Tastsystem 17 mit dem Messtaster 15 ist so mechanisch mit einem Messgerät (zum Beispiel dem Verzahnungsmessgerät 10) verbunden, dass der Messtaster 15 mit mehreren Freiheitsgraden auslenkbar ist und das Tastsystem 17 Signale erzeugt, die Information über die Auslenkung repräsentiert. Die Signale können zum Beispiel optisch erzeugt werden. Es können aber auch Dehnmessstreifen und/oder andere Elemente eingesetzt werden, um Bewegungen in Signale umzusetzen. Weitere Details des Verzahnungsmessgerät 10 sind nicht in den Figuren gezeigt.

In einer alternativen Ausführungsform ist der Permanentmagnet auf der Seite des Tastsystems 17 angeordnet, ist also nicht ein Teil des abnehmbaren Tellers 15.1. Es können auch mehrere Magnete vorhanden sein.

In einer bevorzugten Ausführungsform der Erfindung ist zum Überführen des Messtasters 15 von der Nullposition in die Wechselposition eine Zugkraft F2 aufzubringen, die ein räumliches Trennen von Permanentmagnet 15.4 und Messtaster 15 bewirkt. Durch das räumliche Trennen von Permanentmagnet 15.4 und Messtaster 15 ist beim Abnehmen des Messtasters 15 in der Wechselposition eine Zugkraft F3 aufzubringen ist, die geringer ist als die Anziehungskraft (auch Haltekraft genannt), die in der Nullposition zwischen dem Permanentmagnet 15.4 und dem Messtaster 15 wirkt.

Typischerweise beträgt die Haltekraft bei einem Verzahnungsmessgerät 10 zwischen 10 und 50N. Besonders bevorzugt ist eine Ausführungsform, bei der die Haltekraft zwischen 15 und 25N beträgt. Durch die Wirkungsweise der erfindungsgemässen Hebelanordnung wird die Kraft F3, die zum Abnehmen des Tellers 15.1 in der Wechselposition notwendig ist reduziert und liegt typischerweise bei 20% bis 50% der Haltekraft. Die zum Abnehmen aufzubringende Kraft F3 hängt von der Haltekraft aber auch von der Anordnung der einzelnen Elemente der Hebelanordnung ab. Durch eine Vergrösserung des Hebelarms der Hebelanordnung kann die Kraft F3 reduziert werden, die zum Abnehmen des Tellers 15.1 notwendig ist.

In einer bevorzugten Ausführungsform der Erfindung ist zum Schutz des Tastsystems 17 ein integrierter, mechanischer Kollisionsschutz vorgesehen. Dieser Kollisionsschutz kann vorzugsweise wie folgt realisiert werden. Die mechanische Hebelanordnung wird so ausgelegt, dass sie sich solidarisch mit dem Messtaster 15 in Richtung des Tastsystems 17 verschieben lässt. Bei dem Auftreten einer Grenzkraft F1 wird der Messtaster 15 samt Hebelanordnung gegen einen Anschlag geschoben, um so den Kollisionsschutz zu gewährleisten. Beispielhafte Details hierzu sind der Fig. 3B zu entnehmen. Ein solcher Kollisionsschutz ist optional.

Vorzugsweise ist die mechanische Hebelanordnung so ausgelegt ist, dass durch ein Begrenzungsmittel 17.8 eine vordere Begrenzung des Messbereichs des Messgeräts vorgegeben ist. Diese Begrenzung ist optional. Es gibt verschiedene Wege und Möglichkeiten ein solches Begrenzungsmittel zu realisieren.

Die Erfindung zeichnet sich in der in den Figuren 3A bis 3J gezeigten besonderen Ausführungsform dadurch aus, dass die mechanische Hebelanordnung so ausgelegt ist, dass beim Aufbringen einer Zugkraft F, die auf den Messtaster 15 in negativer Y-Koordinatenrichtung wirkt, eine solidarische Verschiebung des Messtasters 15 samt der Hebelanordnung erfolgt, wobei diese solidarische Verschiebung nach dem Zurücklegen einer ersten Strecke endet und ein weiteres Aufbringen einer Zugkraft F2 eine Aktivierung der Hebelanordnung auslöst. Erst durch diese Aktivierung der Hebelanordnung wird der Permanentmagnet 15.4 räumlich vom Messtaster 15 getrennt. Diese Art der Ausführungsform ist besonders vorteilhaft, da man beim Ziehen an der Anordnung spürt, dass das Ende der ersten Strecke erreicht ist und dass nun das Trennen eingeleitet wird. Diese Ausführungsform ist intuitiv zu bedienen und bietet, wenn sie mit einer optionalen Arretierung kombiniert ist, einen Schutz gegen unzulässige Belastungen oder Beanspruchungen.

In einer bevorzugten Ausführungsform ist zwischen dem Permanentmagneten 15.4 und einer gegenüberliegenden metallischen Platte ein Luftspalt 18 vorgesehen. Bewährt hat sich ein Luftspalt 18 zwischen 0.1 und 0.5 mm Weite. Beim Überführen des Tastkopfes 15 samt Tastsystem 17 in die Wechselposition wird die Weite des Luftspalts 18 durch die Wirkung der Hebelanordnung vorzugsweise um 100% bis 200% vergrössert.

Die erste Strecke, die bei der Verschiebung von der Nullposition in die Wechselposition zurückgelegt wird, beträgt vorzugsweise zwischen 1 und 2 mm. Die Strecke, die zurückgelegt werden muss, um die Trennung des Messtasters 15 von dem Tastsystem 17 zu erreichen, beträgt vorzugsweise weniger als 5 mm und liegt in einer besonders bevorzugten Ausführungsform im Bereich von 1 mm bis 3 mm.

Vorzugsweise umfasst die Hebelanordnung eine Feder 19 als federndes Element, oder eine Kombination mehrerer federnder Elemente, die eine Arretierung bewirken.

Bevorzugt wird eine Ausführungsform, bei der zum Beispiel ein Hebelelement 17.2 der Hebelanordnung rückwärts gerichtet (d.h. in positive Y-Koordinatenrichtung) gegen einen Teil des Tastsystems 17 drückt, um die Hebelanordnung zu arretieren, nachdem der Messtaster 15 abgenommen wurde, wobei vorzugsweise eine von einer Feder 19 als federndes Element ausgeübte Rückstellkraft das Hebelelement 17.2 vorwärts (in -Y Richtung) gegen den Rand des Tastsystems 17 drückt. Eine solche Arretierung ist optional.

Vorzugsweise wird die Hebelanordnung so realisiert, dass der Messtaster 15 - oder ein anderer Messtaster mit kompatiblem Aufbau des Tellers 15.1 - am Tastsystem 17 befestigbar ist, indem eine Druckkraft F gegen den Messtaster 15 drückt, um die räumlich Trennung von Permanentmagnet 15.4 und Messtaster 15 zu reduzieren.

In einer anderen bevorzugten Ausführungsform ist die Hebelanordnung so realisiert, dass das Entfernen des Permanentmagnets durch eine Kraft ausgelöst wird, die in X- und/oder Z- Richtung gerichtet ist. Auch bei solchen Ausführungsformen ist es vorteilhaft erst eine solidarische Verschiebung des Tastkopfes 15.1 in eine Richtung vorzusehen, um den Tastkopf 15.1 so in eine Wechselposition zu überführen. Erst nach dem Überwinden dieser Wechselposition wird dann mittels der erfindungsgemässen Hebelanordnung das Entfernen des Permanentmagnets ausgelöst.

Ein Tastkopf umfasst typischerweise, wie in den Figuren 1 und 2 gezeigt, einen abnehmbarem Messtaster 15 und ein Führungssystem, das ein Teil des Tastsystems 17 ist. Das Führungssystem kann in einem zylindrischen Gehäuse untergebracht sein, das hauptsächlich zum Schutz der empfindlichen Mechanik dient. Es gibt neben dem in Fig. 2 beispielhaft gezeigten Parallelogrammführungssystem auch zahlreiche andere Möglichkeiten eine mechanische Kopplung zwischen dem Messtaster 15 und dem Messgerät zu bewerkstelligen.

Die Erfindung kann sowohl in Messgeräten 10 mit schaltenden Tastköpfen, als auch in Messgeräten 10 mit messenden Tastköpfen eingesetzt werden, wie zum Beispiel in DE 3320127 C2 beschrieben.

In einer bevorzugten Ausführungsform handelt es sich bei der erfindungsgemässen Vorrichtung um eine Bearbeitungsmaschine oder ein Koordinaten-Verzahnungsmessgerät, das mit einer Vorrichtung zum automatisierten Tastkopfwechsel ausgestattet ist. Entweder ist ein Roboterarm vorgesehen, der einen Tastkopf relativ zum Tastsystem 17 ausrichtet und durch Aufbringen einer Druckkraft gegen die Hebelanordnung bewegt, bis die Anziehungskraft des Magneten 15.4 ausreicht, um den Messtaster 15 anzuziehen. Alternativ kann das Tastsystem 17 so ausgeführt sein, dass es auf ein Magazin oder dergleichen zu bewegt werden kann, um dort einen Messtaster 15 aufzunehmen. Zu diesem Zweck wird das Tastsystem 17 mit einer ausreichenden Kraft gegen einen im Magazin gelagerten Messtaster 15 gedrückt, bis die Anziehungskraft des Magneten 15.4 ausreicht, um den Teller 15.1 des Messtasters 15 zuverlässig zu halten. Dann kann das Tastsystem 17 samt Messtaster 15 in eine Position bewegt werden, in der eine Messung ausgeführt werden kann.

Manuell durchzuführende Arbeitsgänge können dadurch ganz oder teilweise entfallen. Eine derartig automatisierte Lösung ist möglich, da gemäss Erfindung das Abnehmen und Befestigen eines Messtasters 15 an dem Tastsystem 17 nur relativ einfache Bewegungsabläufe erforderlich macht.

Es werden bei den Messgeräten hauptsächlich Messtaster in horizontaler Bauweise verwendet, wie in den Figuren 1 und 2 dargestellt. Es gibt aber auch Messgeräte, deren Tastköpfe in hängender oder stehender Bauweise zum Einsatz kommen. Die Erfindung kann selbstverständlich auch in einem Messgerät mit hängendem oder stehendem Tastsystem 17 verwendet werden, wobei die Magnetkraft so ausgelegt werden muss, dass der abnehmbare Teller in den verschiedenen Positionen sicher hält.

Bei präziser Ausführung des Tastsystems 17 kann ein Kalibrieren des Messgeräts nach dem Wechseln des Messtasters 15 entfallen. Eine Kalibrierung kann jedoch von Zeit zu Zeit durchgeführt werden, um zu vermeiden, dass sich Messungenauigkeiten einstellen.

Es ist ein Vorteil der verschiedenen erfindungsgemässen Ausführungsformen, dass mit einfachen Mitteln relativ hohe Haltekräfte realisiert werden können. Die Handhabung ist relativ einfach, da eine deutlich reduzierte Anziehungskraft beim Aufsetzen und Abnehmen des Teller 15.1 auftritt. Besonders vorteilhaft ist eine Ausführungsform mit automatisiertem Wechsler. Weiter vorteilhaft ist, das eine Wechseln des Messtasters 15 mit nur einer Hand möglich ist, da keine Schalter, Taster oder Hebel betätigt werden müssen. Ausserdem ist vorteilhaft, dass die bewegte Masse geringer ist als bei konventionellen Lösungen. Es wird auch als ein wesentlicher Vorteil angesehen, dass bei einer Kollision die Haltekraft mit vergrössertem Luftspalt stark abnimmt. Dadurch können Beschädigungen vermieden werden. Es ist auch von Vorteil, dass keine Kabel zu Messtaster 15 oder zum Trennbereich geführt werden müssen, da das System passiv arbeitet.

## Patentansprüche

1. Vorrichtung mit abnehmbarem Messtaster (15), einem Permanentmagnet (15.4), einer Tastkopfbasis (4) und einer Hebelanordnung, und mit einem Tastsystem (17) das Signale erzeugt, die Information über eine Auslenkung des Messtasters (15) repräsentieren, wobei der Messtaster (15) durch die Anziehungskraft des Permanentmagnets (15.4) mit dem Tastsystem (17) verbunden und über die Hebelanordnung von diesem trennbar ist, **dadurch gekennzeichnet, dass**
- die Vorrichtung Federparallelogramm-Systeme (1, 2) umfasst, die funktionell senkrecht zueinander angeordnet sind, und wobei der Messtaster (15) so über diese Federparallelogramm-Systeme (1, 2) mechanisch mit der Tastkopfbasis (4) verbunden ist, dass der Messtaster (15) mit mehreren Freiheitsgraden auslenkbar ist, und wobei die Hebelanordnung als mechanische Hebelanordnung (17.2, 17.3, 17.4 ,17.5, 17.6, 17.7, 17.8, 17.9, 17.11) ausgelegt ist, die so ausgeführt und zwischen dem Messtaster (15) und dem Tastsystem (17) vorgesehen ist, dass durch die mechanische Hebelanordnung (17.2, 17.3, 17.4, 17.5, 17.6, 17.7, 17.8, 17.9, 17.11) vor einem Abnehmen des Messtasters (15) mittels einer Verlagerungsbewegung des Messtasters (15) der Messtaster (15) samt einem Teil des Tastsystems (17) in eine Wechselposition überführbar ist und dabei durch die mechanische Hebelanordnung (17.2, 17.3, 17.5, 17.11) ein Luftspalt (18) am Permanentmagnet (15.4) vergrösserbar ist und somit die Anziehungskraft, die zwischen dem Messtaster (15) und dem Tastsystem (17) wirkt, reduzierbar ist, um so das Abnehmen des Messtasters (15) zu erleichtern.

2. Vorrichtung nach Anspruch 1, **dadurch gekennzeichnet, dass** die Hebelanordnung (17.2, 17.3,17.5,17.11) ein oder mehrere federnde Elemente umfasst, die vorzugsweise zur Arretierung bei angenommenem Messtaster (15) dienen.

3. Vorrichtung nach Anspruch 1 oder 2, **dadurch gekennzeichnet, dass** durch das räumliche Trennen von Permanentmagnet (15.4) und Messtaster (15) beim Abnehmen des Messtasters (15) in der Wechselposition eine Zugkraft aufzubringen ist, die geringer ist als die Anziehungskraft.

4. Vorrichtung nach Anspruch 1 oder 2, **dadurch gekennzeichnet, dass** die mechanische Hebelanordnung (17.2, 17.3, 17.5, 17.11) solidarisch mit dem Messtaster (15) verschiebbar ist, wobei beim Auftreten einer Grenzkraft der Messtaster (15) samt Hebelanordnung (17.2, 17.3, 17.5, 17.11) gegen einen Anschlag stösst, um so einen Kollisionsschutz zu bieten.

5. Vorrichtung nach Anspruch 1 oder 2, **dadurch gekennzeichnet, dass** die mechanische Hebelanordnung (17.2, 17.3, 17.5, 17.11) so ausgelegt ist, dass durch ein Begrenzungsmittel (17.8) eine vordere Begrenzung des Messbereichs vorgegeben ist.

6. Vorrichtung nach Anspruch 1, 2 oder 5, **dadurch gekennzeichnet, dass** die mechanische Hebelanordnung (17.2, 17.3, 17.5, 17.11) so ausgelegt ist, dass beim Aufbringen einer Zugkraft, die auf den Messtaster (15) wirkt eine solidarische Verschiebung des Messtasters (15) samt der Hebelanordnung (17.2, 17.3, 17.5, 17.11) erfolgt, wobei diese solidarische Verschiebung nach dem Zurücklegen einer ersten Strecke endet und ein weiteres Aufbringen einer Zugkraft eine Aktivierung der Hebelanordnung (17.2, 17.3, 17.5, 17.11) auslöst und **dadurch** den Permanentmagnet (15.4) räumlich vom Messtaster (15) trennt.

7. Vorrichtung nach Anspruch 6, **dadurch gekennzeichnet, dass** bei der Aktivierung ein Hebelelement (17.2) der Hebelanordnung (17.2, 17.3, 17.5, 17.11) kippbar ist, um den Permanentmagnet (15.4) räumlich vom Messtaster (15) zu trennen.

8. Vorrichtung nach Anspruch 2, **dadurch gekennzeichnet, dass** ein Hebelelement (17.2) der Hebelanordnung (17.2, 17.3, 17.5, 17.11) rückwärts gerichtet gegen einen Teil des Tastsystems (17) drückt, um die Hebelanordnung (17.2, 17.3, 17.5, 17.11) zu arretieren, nachdem der Messtaster (15) abgenommen wurde, wobei vorzugsweise eine von dem federnden Element (19) ausgeübte Rückstellkraft das Hebelelement (17.2) gegen den Teil des Tastsystems (17) drückt.

9. Vorrichtung nach Anspruch 1 oder 2, **dadurch gekennzeichnet, dass** der Messtaster (15) oder ein anderer Messtaster (15) am Tastsystem (17) befestigbar ist, indem durch das Aufbringen einer Druckkraft, die gegen den Messtaster (15) drückt, sich die räumlich Trennung von Permanentmagnet (15.4) und Messtaster (15) reduziert.

10. Vorrichtung nach Anspruch 9, **dadurch gekennzeichnet, dass** der Messtaster (15) durch das Aufbringen der Druckkraft in eine hintere Endstellung verschiebbar ist.

11. Messgerät (10), das eine Vorrichtung gemäss einem der Ansprüche 1 bis 10 umfasst, wobei es sich bei dem Messgerät (10) um ein Zwei- oder Drei-Koordinaten Messgerät (10) handelt.

12. Messgerät (10) nach Anspruch 11, wobei das Messgerät (10) Teil einer Bearbeitungsmaschine ist.

## Claims

1. A device having a removable sensing probe (15), a permanent magnet (15.4), a probe head base (4), and a lever configuration, and having a probe system (17), which generates signals, which represent information about a deflection of the sensing probe (15), the sensing probe (15) being connected to the probe system (17) by the attractive force of the permanent magnet (15.4) and being separable therefrom via the lever configuration, **characterized in that**
- the device comprises spring parallelogram systems (1, 2), which are situated functionally perpendicularly to one another, and the sensing probe (15) being mechanically connected to the probe head base (4) via these spring parallelogram systems (1, 2) in such a way that the sensing probe (15) may be deflected at multiple degrees of freedom, and the lever configuration being designed as a mechanical lever configuration (17.2, 17.3, 17.4, 17.5, 17.6, 17.7, 17.8, 17.9, 17.11), which is executed and provided between the sensing probe (15) and the probe system (17) in such a way that the sensing probe (15), together with a part of the probe system (17), is transferable into a changing position by the mechanical lever configuration (17.2, 17.3, 17.4, 17.5, 17.6, 17.7, 17.8, 17.9, 17.11) before a removal of the sensing probe (15) using a displacement movement of the sensing probe (15), and an air gap (18) on the permanent magnet (15.4) may be enlarged at the same time by the mechanical lever configuration (17.2, 17.3, 17.5, 17.11) and thus the attractive force which acts between the sensing probe (15) and the probe system (17) is reducible to thus make removing the sensing probe (15) easier.

2. The device according to Claim 1, **characterized in that** the lever configuration (17.2, 17.3, 17.5, 17.11) comprises one or more elastic elements which are preferably used for locking when the sensing probe (15) is removed.

3. The device according to Claim 1 or 2, **characterized in that** a tensile force which is smaller than the attractive force is to be applied in the changing position by the spatial separation of permanent magnet (15.4) and sensing probe (15) upon removal of the sensing probe (15).

4. The device according to Claim 1 or 2, **characterized in that** the mechanical lever configuration (17.2, 17.3, 17.5, 17.11) is displaceable in solidarity with the sensing probe (15), the sensing probe (15) hitting a stop together with the lever configuration (17.2, 17.3, 17.5, 17.11) upon occurrence of a limiting force, to thus offer a collision protection.

5. The device according to Claim 1 or 2, **characterized in that** the mechanical lever configuration (17.2, 17.3, 17.5, 17.11) is designed in such a way that a forward delimitation of the measurement area is provided by a delimitation means (17.8).

6. The device according to Claim 1, 2, or 5, **characterized in that** the mechanical lever configuration (17.2, 17.3, 17.5, 17.11) is designed in such a way that, upon application of a tensile force which acts on the sensing probe (15), a displacement of the sensing probe (15) occurs in solidarity together with the lever configuration (17.2, 17.3, 17.5, 17.11), this displacement in solidarity ending after covering a first section and a further application of a tensile force triggering an activation of the lever configuration (17.2, 17.3, 17.5, 17.11) and thus separating the permanent magnet (15.4) spatially from the sensing probe (15).

7. The device according to Claim 6, **characterized in that** upon the activation, a lever element (17.2) of the lever configuration (17.2, 17.3, 17.5, 17.11) is tiltable to separate the permanent magnet (15.4) spatially from the sensing probe (15).

8. The device according to Claim 2, **characterized in that** a lever element (17.2) of the lever configuration (17.2, 17.3, 17.5, 17.11) presses against a part of the probe system (17) directed backward, to lock the lever configuration (17.2, 17.3, 17.5, 17.11) after the sensing probe (15) has been removed, a restoring force exerted by the elastic element (19) preferably pressing the lever element (17.2) against a part of the probe system (17).

9. The device according to Claim 1 or 2, **characterized in that** the sensing probe (15) or another sensing probe (15) is attachable to the probe system (17), **in that** the spatial separation of permanent magnet (15.4) and sensing probe (15) is reduced by the application of a pressure force which presses against the sensing probe (15).

10. The device according to Claim 9, **characterized in that** the sensing probe (15) is displaceable into a rear final position by the application of the pressure force.

11. A measuring apparatus (10), which comprises a device according to one of Claims 1 through 10, the measuring apparatus (10) being a two or three coordinate measuring apparatus (10).

12. The measuring apparatus (10) according to Claim 11, the measuring apparatus (10) being a part of a processing machine.

## Revendications

1. Dispositif comportant un palpeur de mesure (15) amovible, un aimant permanent (15.4), une base de tête palpeuse (4) et un dispositif à levier, et comportant un système de palpeur (17) qui génère des signaux qui représentent des informations sur une déviation du palpeur de mesure (15), dans lequel le palpeur de mesure (15) est relié au système de palpeur (17) par la force d'attraction de l'aimant permanent (15.4) et peut être séparé de celui-ci par le dispositif à levier, **caractérisé en ce que**
- le dispositif comprend des systèmes de parallélogrammes à ressort (1, 2) qui sont disposés sur le plan fonctionnel perpendiculairement l'un à l'autre, où le palpeur de mesure (15) est relié mécaniquement à la base de tête palpeuse (4) par ces systèmes de parallélogrammes à ressorts (1, 2) de façon telle que le palpeur de mesure (15) peut dévier avec plusieurs degrés de liberté, et où le dispositif à levier est conçu en tant que dispositif mécanique à levier (17.2, 17.3, 17.4, 17.5, 17.6, 17.7, 17.8, 17.9, 17.11) qui est exécuté et prévu entre le palpeur de mesure (15) et le système de palpeur (17) de façon à ce que, par le dispositif mécanique à levier (17.2, 17.3, 17.4, 17.5, 17.6, 17.7, 17.8, 17.9, 17.11), avant un retrait du palpeur de mesure (15), au moyen d'un mouvement de décentrage du palpeur de mesure (15), on peut transférer le palpeur de mesure (15) y compris une partie du système de palpeur (17) dans une position de changement et alors, par le dispositif mécanique à levier (17.2, 17.3, 17.5, 17.11), agrandir un entrefer (18) au niveau de l'aimant permanent (15.4) et donc réduire la force d'attraction qui s'exerce entre le palpeur de mesure (15) et le système de palpeur (17) pour alors faciliter le retrait du palpeur de mesure (15).

2. Dispositif selon la revendication 1, **caractérisé en ce que** le dispositif à levier (17.2, 17.3, 17.5, 17.11) comprend un ou plusieurs éléments à ressort qui servent de préférence au blocage une fois le palpeur de mesure (15) accepté.

3. Dispositif selon la revendication 1 ou 2, **caractérisé en ce que**, par la séparation spatiale de l'aimant permanent (15.4) et du palpeur de mesure (15) lors du retrait du palpeur de mesure (15) dans la position de changement, on doit introduire une force de traction qui est plus faible que la force d'attraction.

4. Dispositif selon la revendication 1 ou 2, **caractérisé en ce que** le dispositif mécanique à levier (17.2, 17.3, 17.5, 17.11) peut être déplacé de façon solidaire avec le palpeur de mesure (15), suite à quoi, lors de la survenue d'une force limite, le palpeur de mesure (15) y compris le dispositif à levier (17.2, 17.3, 17.5, 17.11) bute contre une butée pour offrir alors une protection anti-collision.

5. Dispositif selon la revendication 1 ou 2, **caractérisé en ce que** le dispositif mécanique à levier (17.2, 17.3, 17.5, 17.11) est conçu de façon telle que, par un moyen de limitation (17.8), on prédéfinit une limite avant de la zone de mesure.

6. Dispositif selon la revendication 1, 2 ou 5, **caractérisé en ce que** le dispositif mécanique à levier (17.2, 17.3, 17.5, 17.11) est conçu de façon telle que, lors de l'introduction d'une force de traction qui agit sur le palpeur de mesure (15), il se produit un déplacement solidaire du palpeur de mesure (15) y compris du dispositif à levier (17.2, 17.3, 17.5, 17.11), suite à quoi ce déplacement solidaire se termine après le parcours d'une première course, et une autre application d'une force de traction déclenche une activation du dispositif à levier (17.2, 17.3, 17.5, 17.11) et de ce fait sépare spatialement l'aimant permanent (15.4) du palpeur de mesure (15).

7. Dispositif selon la revendication 6, **caractérisé en ce que**, lors de l'activation, un élément à levier (17.2) du dispositif à levier (17.2, 17.3, 17.5, 17.11) peut être basculé pour séparer spatialement l'aimant permanent (15.4) du palpeur de mesure (15).

8. Dispositif selon la revendication 2, **caractérisé en ce qu'**un élément à levier (17.2) du dispositif à levier (17.2, 17.3, 17.5, 17.11) orienté vers l'arrière pousse contre une partie du système de palpeur (17) pour bloquer le dispositif à levier (17.2, 17.3, 17.5, 17.11) après que le palpeur de mesure (15) a été retiré, suite à quoi, de préférence, une force de rappel exercée par l'élément à ressort (19) pousse l'élément à levier (17.2) contre la partie du système de palpeur (17).

9. Dispositif selon la revendication 1 ou 2, **caractérisé en ce que** le palpeur de mesure (15) ou un autre palpeur de mesure (15) peut être fixé sur le système de palpeur (17) **en ce que**, par l'introduction d'une force de compression qui pousse contre le palpeur de mesure (15), la séparation spatiale de l'aimant permanent (15.4) et du palpeur de mesure (15) se réduit.

10. Dispositif selon la revendication 9, **caractérisé en ce que** le palpeur de mesure (15) peut être déplacé dans une position finale arrière par introduction de la force de compression.

11. Appareil de mesure (10) qui comprend un dispositif selon l'une des revendications 1 à 10, et il s'agit concernant l'appareil de mesure (10) d'un appareil de mesure (10) à deux ou trois coordonnées.

12. Appareil de mesure (10) selon la revendication 11, dans lequel l'appareil de mesure (10) est une partie d'une machine d'usinage.
